(19) Europäisches Patentamt
European Patent Office
Office européen des brevets

(11) **EP 4 152 265 A1**

(12) **EUROPEAN PATENT APPLICATION**

(43) Date of publication:
**22.03.2023 Bulletin 2023/12**

(21) Application number: **21306292.0**

(22) Date of filing: **17.09.2021**

(51) International Patent Classification (IPC):
**G06T 9/00** (2006.01) **H04N 19/91** (2014.01)

(52) Cooperative Patent Classification (CPC):
**G06T 9/001; G06T 9/005; H04N 19/91**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100000 (CN)**

(72) Inventor: **LASSERRE, SEBASTIEN**
**35235 THORIGNE-FOUILLARD (FR)**

(74) Representative: **RVDB Rennes**
**15, rue du Chêne Germain**
**FR-35510 Cesson-Sévigné (FR)**

(54) **METHOD AND APPARATUS OF ENCODING/DECODING POINT CLOUD GEOMETRY DATA SENSED BY AT LEAST ONE SENSOR**

(57) There is provided methods and apparatus of encoding/decoding point cloud geometry data represented by ordered coarse points occupying some discrete positions of a two-dimensional space. At least one first binary data ($f_j$) representative of an order index difference representative of a difference between order indices of two consecutive occupied coarse points, is obtained and each of said at least one first binary data ($f_j$) is entropy encoded based on a series of at least one second binary data ($f_{j,n}$) and a coordinate difference ($C_j$) between a first coordinate of a current coarse point and a first coordinate of a preceding occupied coarse point in the two-dimensional space. Said current and preceding occupied coarse points having a same second coordinate in the two-dimensional space and, said series is representative of an occupancy data of at least one neighboring coarse point belonging to a causal neighborhood of the current coarse point.

Fig. 13

**Description**

<u>FIELD</u>

The present application generally relates to point cloud compression and, in particular to methods and apparatus of encoding/decoding point cloud geometry data sensed by at least one sensor.

<u>BACKGROUND</u>

The present section is intended to introduce the reader to various aspects of art, which may be related to various aspects of at least one exemplary embodiments of the present application that is described and/or claimed below. This discussion is believed to be helpful in providing the reader with background information to facilitate a better understanding of the various aspects of the present application.

As a format for the representation of 3D data, point clouds have recently gained traction as they are versatile in their capability in representing all types of physical objects or scenes. Point clouds may be used for various purposes such as culture heritage/buildings in which objects like statues or buildings are scanned in 3D in order to share the spatial configuration of the object without sending or visiting it. Also, it is a way to ensure preserving the knowledge of the object in case it may be destroyed; for instance, a temple by an earthquake. Such point clouds are typically static, colored and huge.

Another use case is in topography and cartography in which using 3D representations allow for maps that are not limited to the plane and may include the relief. Google Maps is now a good example of 3D maps but uses meshes instead of point clouds. Nevertheless, point clouds may be a suitable data format for 3D maps and such point clouds are typically static, colored and huge.

Virtual Reality (VR), Augmented Reality (AR) and immersive worlds have recently become a hot topic and are foreseen by many as the future of 2D flat video. The basic idea is to immerse the viewer in a surrounding environment, in contrast to a standard TV that only allows the viewer to look at the virtual world in front of him/her. There are several gradations in the immersivity depending on the freedom of the viewer in the environment. A point cloud is a good format candidate for distributing VR/AR worlds.

The automotive industry, and more particularly foreseen autonomous cars, are also domains in which point clouds may be intensively used. Autonomous cars should be able to "probe" their environment to make good driving decisions based on the detected presence and nature of their immediate nearby objects and road configuration.

A point cloud is a set of points located in a three-dimensional (3D) space, optionally with additional values attached to each of the points. These additional values are usually called attributes. Attributes may be, for example, three-component colors, material properties like reflectance and/or two-component normal vectors to a surface associated with a point.

A point cloud is thus a combination of geometry data (locations of the points in a 3D space usually represented by 3D cartesian coordinates x,y and z) and attributes.

Point clouds may be sensed by various types of devices like an array of cameras, depth sensors, lasers (light detection and ranging, also known as Lidars), radars, or may be computer-generated (for example in movie post-production). Depending on the use cases, points clouds may have from thousands to up to billions of points for cartography applications. Raw representations of point clouds require a very high number of bits per point, with at least a dozen of bits per cartesian coordinate x, y or z, and optionally more bits for the attribute(s), for instance three times 10 bits for the colors.

It is important in many applications to be able to either distribute point clouds to an end-user or store them in a server by consuming only a reasonable amount of bitrate or storage space, while maintaining an acceptable (or preferably very good) quality of experience. Efficient compression of these point clouds is a key point in order to make the distribution chain of many immersive worlds practical.

Compression may be lossy (like in video compression) for the distribution to and visualization by an end-user, for example on AR/VR glasses or any other 3D-capable device. Other use cases do require lossless compression, like medical applications or autonomous driving, to avoid altering the results of a decision obtained from the subsequent analysis of the compressed and transmitted point cloud.

Until recently, point cloud compression (aka PCC) was not addressed by the mass market and no standardized point cloud codec was available. In 2017, the standardization working group ISO/JCT1/SC29/WG11, aka Moving Picture Experts Group or MPEG, has initiated work items on point cloud compression. This has led to two standards, namely

- MPEG-I part 5 (ISO/IEC 23090-5) or Video-based Point Cloud Compression (aka V-PCC)

- MPEG-I part 9 (ISO/IEC 23090-9) or Geometry-based Point Cloud Compression (aka G-PCC)

The V-PCC coding method compresses a point cloud by performing multiple projections of a 3D object to obtain 2D patches that are packed into an image (or a video when dealing with dynamic point clouds). Obtained images or videos are then compressed using already existing image/video codecs, allowing for the leverage of already deployed image and video solutions. By its very nature, V-PCC is efficient only on dense and continuous point clouds because image/video codecs are unable to compress non-smooth patches as would be obtained from the projection of, for example, Lidar-sensed sparse geometry data.

The G-PCC coding method has two schemes for the compression of a sensed sparse geometry data.

The first scheme is based on an occupancy tree, being locally any type of tree among octree, quadtree or binary tree, representing the point cloud geometry. Occupied nodes (i.e. a node associated with a cube/cuboid comprising at least one point of the point cloud) are split down until a certain size is reached, and occupied leaf nodes provide the 3D locations of points, typically at the center of these nodes. The occupancy information is carried by occupancy data (binary data, flag) signaling the occupancy status of each of the child nodes of nodes. By using neighbor-based prediction techniques, high level of compression of the occupancy data can be obtained for dense point clouds. Sparse point clouds are also addressed by directly coding the position of point within a node with non-minimal size, by stopping the tree construction when only isolated points are present in a node; this technique is known as Direct Coding Mode (DCM).

The second scheme is based on a predictive tree in which each node represents the 3D location of one point and the parent/child relation between nodes represents spatial prediction from parent to children. This method can only address sparse point clouds and offers the advantage of lower latency and simpler decoding than the occupancy tree. However, compression performance is only marginally better, and the encoding is complex, relatively to the first occupancy-based method, because the encoder must intensively look for the best predictor (among a long list of potential predictors) when constructing the predictive tree.

In both schemes, attribute (de)coding is performed after complete geometry (de)coding, leading practically to a two-pass coding. Thus, the joint geometry/attribute low latency is obtained by using slices that decompose the 3D space into sub-volumes that are coded independently, without prediction between the sub-volumes. This may heavily impact the compression performance when many slices are used.

Combining together requirements on encoder and decoder simplicity, on low latency and on compression performance is still a problem that has not been satisfactory solved by existing point cloud codecs.

An important use case is the transmission of sparse geometry data sensed by at least one sensor mounted on a moving vehicle. This usually requires a simple and low latency embarked encoder. Simplicity is required because the encoder is likely to be deployed on computing units which perform other processing in parallel, such as (semi-) autonomous driving, thus limiting the processing power available to the point cloud encoder. Low latency is also required to allow for fast transmission from the car to a cloud in order to have a real-time view of the local traffic, based on multiple-vehicle acquisition, and take adequate fast decision based on the traffic information. While transmission latency can be low enough by using 5G, the encoder itself shall not introduce too much latency due to coding. Also, compression performance is extremely important since the flow of data from millions of cars to the cloud is expected to be extremely heavy.

Specific priors related to spinning Lidar-sensed sparse geometry data have been already exploited in G-PCC and have led to very significant gains of compression.

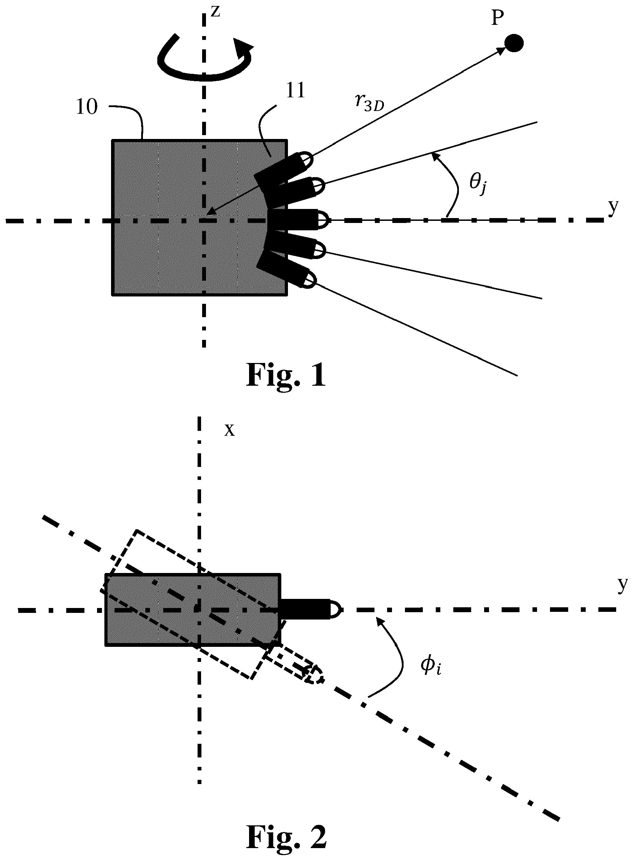

First, G-PCC exploits the elevation angle (relative to the horizontal ground) of sensing from a spinning Lidar head 10 as depicted on **Figures 1** and **2**. A Lidar head 10 comprises a set of sensors 11 (for example lasers), here five sensors are represented. The spinning Lidar head 10 may spin around a vertical axis **z** to sense geometry data of a physical object. Lidar-sensed geometry data is then represented in spherical coordinates $(r_{3D}, \phi, \theta)$, where $r_{3D}$ is the distance of a point P from the Lidar head's center, $\phi$ is an azimuthal angle of the Lidar head's spin relative to a referential, and $\theta$ is an elevation angle of a sensor **k** of the spinning Lidar head 10 relative to a horizontal referential plane.

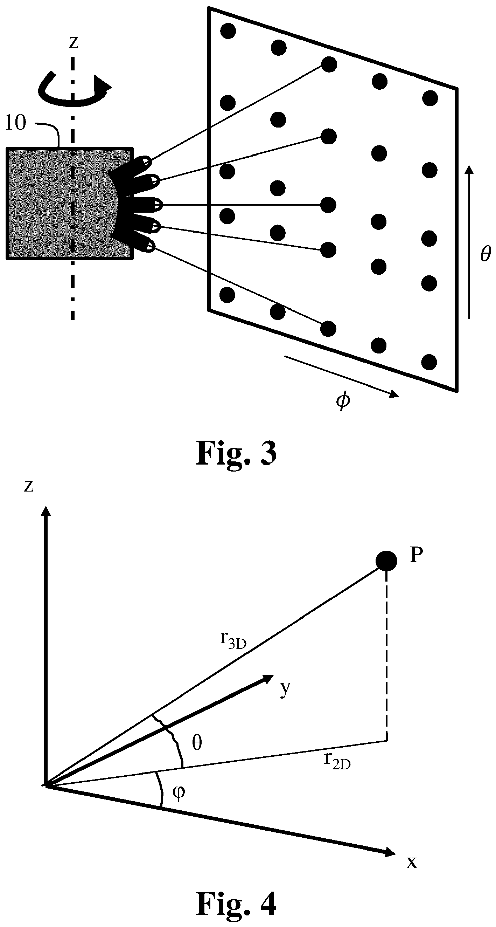

A regular distribution along the azimuthal angle has been observed on Lidar-sensed data as depicted on **Figure 3.** This regularity is used in G-PCC to obtain a quasi 1D representation of the point cloud where, up to noise, only a radius $r_{3D}$ belongs to a continuous range of values while the angles $\phi$ and $\theta$ take only a discrete number of values $\phi_i$ $\forall i$ = 0 *to* I - 1 where I is a number of azimuthal angles used for the sensing of the points and $\theta_j$ $\forall j$ = 0 *to* J - 1 where J is a number of sensors of the spinning Lidar head 10. Basically, G-PCC represents Lidar-sensed sparse geometry data on a two-dimensional (discrete) angular coordinate space $(\phi, \theta)$ as depicted on **Figure 3,** together with a radius value $r_{3D}$ for each point.

This quasi 1D property has been exploited in G-PCC in both the occupancy tree and the predictive tree by predicting, in the spherical coordinate space, the location of a current point based on an already coded point by using the discrete nature of angles.

More precisely, the occupancy tree uses DCM intensively and entropy codes the direct locations of points within a node by using a context-adaptive entropy coder. Contexts are then obtained from the local conversion of the point locations into angular coordinates $(\phi, \theta)$ and from the location of these angular coordinates relative to discrete angular coordinates $(\phi_i, \theta_j)$ obtained from precedingly coded points. The predictive tree directly codes a first version of a point location in the angular coordinates ($r_{2D}$, $\phi$, $\theta$), where $r_{2D}$ is the projected radius on the horizontal xy plane as depicted on **Figure 4,** using the quasi 1D nature ($r_{2D}$, $\phi_i$, $\theta_j$) of this angular coordinate space. Then, spherical coordinates ($r_{2D}$, $\phi$, $\theta$) are converted into 3D cartesian coordinates (x,y,z) and a xyz residual is coded to tackle the errors of coordinate conversion, the approximation of elevation and azimuthal angles and potential noise.

G-PCC does use the angular priors to better compress spinning Lidar-sensed sparse geometry data but does not adapt the coding structure to the order of sensing. By its very nature, the occupancy tree must be coded down to its last depth before outputting a point. This occupancy data is coded in the so-called breadth-first order: the occupancy data of the root node is first coded, indicating its occupied child nodes; then the occupancy data for each of the occupied child nodes is coded, indicating the occupied grand-child nodes; and so on iteratively over the tree depth until leaf nodes can be determined and the corresponding points are provided/output to an application or to the attribute(s) coding scheme. Regarding the predictive tree, the encoder is free to choose the order of point in the tree, but to obtain good compression performance, to optimize the prediction accuracy, G-PCC proposes to code one tree per sensor. This has mainly the same drawback as using one coding slice per sensor, i.e. non-optimal compression performance because prediction between sensors is not allowed and does not provide encoder low latency. Worse, one should have one coding processing per sensor and the number of core coding units should equal the number of sensors; this is not practical.

In brief, in a framework of a spinning sensors head used for sensing sparse geometry data of a point cloud, prior arts do not solve the problem of combining encoding and decoding simplicity, low latency and compression performance.

Moreover, sensing sparse geometry data of point cloud by using spinning sensors head has some drawbacks and other types of sensor head may be used.

The mechanical parts generating the spin (rotation) of a spinning sensors head are prone to breakage and are costly. Also, by construction, the angle of view is necessarily $2\pi$. This does not allow to sense a particular region of interest with high frequency, for instance it may be more interesting to sense in front of a vehicle than behind. Practically in most cases, when a sensor is attached to a vehicle, most of the $2\pi$ angle of view is screened by the vehicle itself and the screened angle of view does not need to be sensed.

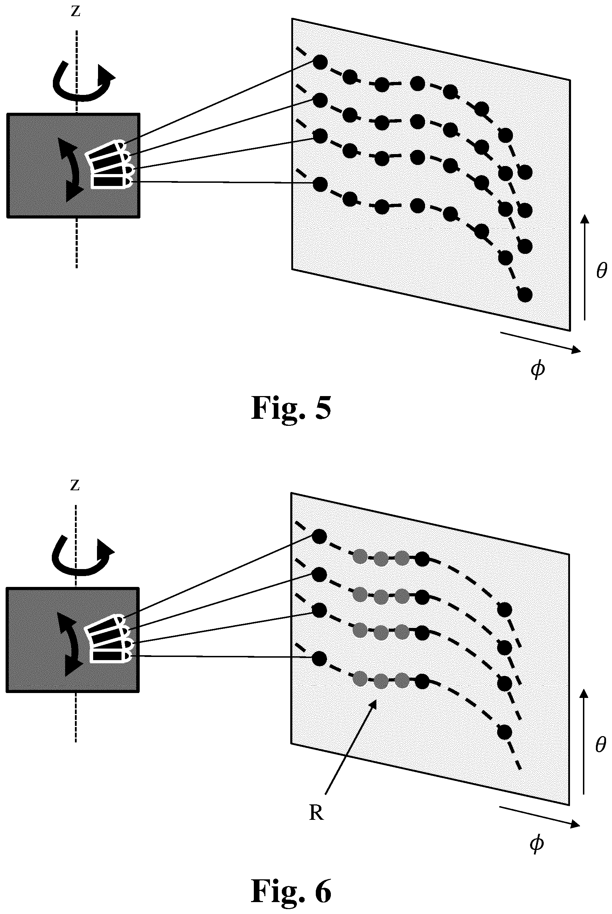

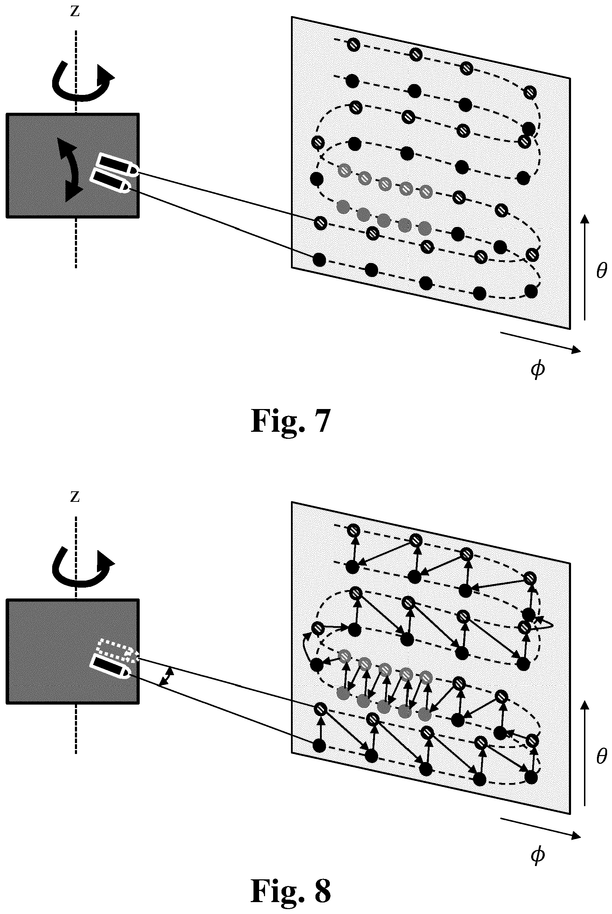

New types of sensors have emerged recently, allowing for a more flexible selection of the region to be sensed. In most recent designs, a sensor can be more freely and electronically (thus avoiding fragile mechanical parts) moved to obtain a large variety of sensing path in the 3D scene as depicted on **Figure 5.** On **Figure 5,** a set of four sensors is shown. Their relative sensing directions, i.e. azimuthal and elevation angles, are fixed relative to each other, however they overall sense a scene following a programmable sensing path depicted by dashed lines on the two-dimensional angular coordinate ($\phi, \theta$) space. Points of the point cloud may then be sensed regularly along the sensing path. Some sensor head may also adapt their sensing frequency by increasing their sensing frequency when a region of interest R has been detected as illustrated on **Figure 6.** Such a region of interest R may be associated with a close object, a moving object, or any object (pedestrian, other vehicle, etc.) precedingly segmented, for instance in a previous frame, or dynamically segmented during the sensing. **Figure 7** shows schematically another example of a sensing path (typical zigzag sensing path) used by a sensor head comprising two sensors able to increase their sensing frequencies when a region of interest has been detected (grey shaded points and grey hashed points). Using a zigzag sensing path may be advantageously used to sense a limited (azimuthal) angular sector of a 3D scene. Because sensors may be attached to a vehicle, their viewports of interest are necessarily limited by the presence of the vehicle itself that obstructs the scene, unless the sensors are located at the top of the car. Consequently, sensors with a limited probing angular sector are of high interest and easier to integrate to a vehicle.

As depicted on **Figure 8,** a sensor head comprising a single sensor may also be used to sense multiple positions (two vertical positions on **Figure 8),** for instance using reflections on mirrors oscillating with rotations (here vertical rotations). In that case, instead of using a set of sensors, a single sensor at different angular positions (i.e. with different elevation angle on **Figure 8**) along a sensing path (here a zigzag sensing path) is used mimicking a sensing using a set of multiple sensors.

For the sake of simplicity, in the following descriptions and claims, the "sensor head" may refer to a set of physical sensors or a set of sensing elevation indexes mimicking a set of sensors as well. Also, one skilled in the art will understand that "a sensor" could also refer to a sensor in each sensing elevation index position.

Combining together requirements on encoder and decoder simplicity, on low latency and on compression performance of point cloud sensed by any type of sensors is still a problem that has not been satisfactory solved by existing point cloud codecs.

At least one exemplary embodiment of the present application has been devised with the foregoing in mind.

## SUMMARY

The following section presents a simplified summary of at least one exemplary embodiment in order to provide a basic understanding of some aspects of the present application. This summary is not an extensive overview of an exemplary embodiment. It is not intended to identify key or critical elements of an embodiment. The following summary merely presents some aspects of at least one of the exemplary embodiments in a simplified form as a prelude to the more detailed description provided elsewhere in the document.

According to a first aspect of the present application, there is provided a method of encoding, into a bitstream, point cloud geometry data represented by ordered coarse points occupying some discrete positions of a set of discrete positions of a two-dimensional space. The method comprises obtaining at least one first binary data representative of an order index difference representative of a difference between order indices of two consecutive occupied coarse points and encoding each of said at least one first binary data by obtaining coordinates of a current coarse point within the two-dimensional space; obtaining a series of at least one second binary data based on occupancy data of precedingly encoded coarse points belonging to a causal neighborhood of the current coarse point; obtaining a coordinate difference between a first coordinate of the current coarse point and a first coordinate of a preceding occupied coarse point in the two-dimensional space, said current and preceding occupied coarse points having a same second coordinate in the two-dimensional space; and entropy encoding, into the bitstream, the first binary data based on the series of at least one second binary data and the coordinate difference.

According to a second aspect of the present application, there is provided a method of decoding, from a bitstream, point cloud geometry data represented by ordered coarse points occupying some discrete positions of a set of discrete positions of a two-dimensional space. The method comprises obtaining an order index difference representative of a difference between order indices of two consecutive occupied coarse points from at least one decoded first binary data, wherein each of said at least one first binary data is decoded by: obtaining coordinates of a current coarse point within the two-dimensional space; obtaining a series of at least one second binary data based on occupancy data of precedingly decoded coarse points belonging to a causal neighborhood of the current coarse point; obtaining a coordinate difference between a first coordinate of the current coarse point and a first coordinate of a preceding occupied coarse point in the two-dimensional space, said current and preceding occupied coarse points having a same second coordinate in the two-dimensional space; and entropy decoding, from the bitstream, the first binary data based on the series of at least one second binary data and the coordinate difference.

In one exemplary embodiment, a neighborhood coordinate difference is obtained based on a comparison of the coordinate difference with a neighborhood width of the causal neighborhood, and the first binary data is entropy encoded based on the series of at least one second binary data and the neighborhood coordinate difference.

In one exemplary embodiment, the neighborhood coordinate difference equal to a particular value if and only if the preceding occupied coarse point belongs to the causal neighborhood.

In one exemplary embodiment, entropy encoding or decoding the first binary data comprises obtaining a first index from the series of at least one second binary data and either the coordinate difference or the neighborhood coordinate difference, the first index being representative of a neighborhood occupancy configuration among a first set of neighborhood occupancy configuration indices representative of potential neighborhood occupancy configurations; obtaining a second index by applying an index range reduction function to the first index; the second index is representative of the neighborhood occupancy configuration among a second set of neighborhood occupancy configuration indices representative of the potential neighborhood occupancy configurations; the index range reduction function is adapted to map each index of the first set of neighborhood occupancy configuration indices to an index of the second set of neighborhood occupancy configuration indices; and the range of the second set of neighborhood occupancy configuration indices being lower than the range of the first set of neighborhood occupancy configuration indices; and entropy encoding or decoding the first binary data based on the second index.

In one exemplary embodiment, the index range reduction function is a hashing function.

In one exemplary embodiment, the coordinate difference or the neighborhood coordinate difference is combined with a neighborhood occupancy configuration associated with the first index or the second index.

In one exemplary embodiment, the preceding occupied coarse point is the penultimate occupied coarse point.

In one exemplary embodiment, entropy encoding or decoding the first binary data comprises selecting a context among a set of contexts based on at least the series of at least one second binary data or the second index.

According to a third aspect of the present application, there is provided an apparatus of encoding, into a bitstream, point cloud geometry data represented by ordered coarse points occupying some discrete positions of a set of discrete positions of a two-dimensional space. The apparatus comprising one or more processors configured to carry out a method according to the first aspect of the present application.

According to a fourth aspect of the present application, there is provided an apparatus of decoding, from a bitstream, point cloud geometry data represented by ordered coarse points occupying some discrete positions of a set of discrete positions of a two-dimensional space. The apparatus comprising one or more processors configured to carry out a method according to the second aspect of the present application.

According to a fifth aspect of the present application, there is provided a computer program product including instructions which, when the program is executed by one or more processors, causes the one or more processors to carry out a method according to the first aspect of the present application.

According to a sixth aspect of the present application, there is provided a non-transitory storage medium carrying instructions of program code for executing a method according to the first aspect of the present application.

According to a seventh aspect of the present application, there is provided a computer program product including instructions which, when the program is executed by one or more processors, causes the one or more processors to carry out a method according to the second aspect of the present application.

According to an eighth aspect of the present application, there is provided a non-transitory storage medium carrying instructions of program code for executing a method according to the second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows schematically a side view of a sensor head and some of its parameters in accordance with prior art;

**Figure 2** shows schematically a top view of the sensor head and some of its parameters in accordance with prior art;

**Figure 3** shows schematically a regular distribution of data sensed by a spinning sensor head in accordance with prior art;

**Figure 4** shows schematically a representation of a point of a point cloud in a 3D space in accordance with prior art;

**Figure 5** shows schematically an example of a sensor head able to sense a real scene following a programmable sensing path in accordance with prior art;

**Figure 6** shows schematically an example of a sensor head able to sense a real scene following a programmable sensing path according to different sensing frequencies in accordance with prior art;

**Figure 7** shows schematically an example of a sensor head able to sense a real scene following a programmable zigzag sensing path according to different sensing frequencies in accordance with prior art;

**Figure 8** shows schematically a single sensor head able to sense a real scene following a programmable zigzag sensing path according to different sensing frequencies;

**Figure 9** shows schematically ordered coarse points of a coarse representation in accordance with at least one exemplary embodiment;

**Figure 10** shows schematically an example of an ordering of coarse points in accordance with one exemplary embodiment;

**Figure 11** shows schematically a representation of ordered coarse points in the two-dimensional coordinate $(s, \lambda)$ space;

**Figure 12** shows schematically ordered coarse points of a coarse representation in accordance with at least one exemplary embodiment;

**Figure 13** shows a schematic block diagram of steps of a method 100 of encoding point cloud geometry data into a bitstream of encoded point cloud data in accordance with at least one exemplary embodiment;

**Figure 14** shows schematically an example of a neighborhood occupancy configuration in accordance with one exemplary embodiment;

**Figure 15** shows schematically an example of a neighborhood occupancy configuration in accordance with one exemplary embodiment;

**Figures 16** shows schematically an example of a coordinate difference Cj computed on an example of a neighborhood occupancy configuration;

**Figures 17** shows schematically an example of a coordinate difference Cj computed on an example of a neighborhood occupancy configuration;

**Figures 18** shows schematically an example of a coordinate difference Cj computed on an example of a neighborhood occupancy configuration;

**Figures 19** shows schematically an example of a coordinate difference Cj computed on an example of a neighborhood occupancy configuration;

**Figure 20** shows a schematic block diagram of steps of a method 200 of decoding point cloud geometry data from a bitstream of encoded point cloud data in accordance with at least one exemplary embodiment;

**Figure 21** shows a schematic the step 150 of the method 100 and the step 220 of the method 200 in accordance with at least one exemplary embodiment;

**Figure 22** shows a schematic block diagram of steps of a Context Adaptive Binary Arithmetic Coder in accordance with at least one exemplary embodiment;

**Figure 23** shows schematically the step 150 of the method 100 and the step 220 of the method 200 in accordance with at least one exemplary embodiment; and

**Figure 24** illustrates a schematic block diagram of an example of a system in which various aspects and exemplary embodiments are implemented.

Similar reference numerals may have been used in different figures to denote similar components.

## DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the disclosure is intended to cover all modifications, equivalents, and alternatives falling within the spirit and scope of the present application.

At least one of the aspects generally relates to point cloud encoding and decoding, one other aspect generally relates to transmitting a bitstream generated or encoded and one other aspects relates to receiving/accessing a decoded bitstream.

Moreover, the present aspects are not limited to MPEG standards such as MPEG-I part 5 or part 9 that relate to the Point Cloud Compression, and may be applied, for example, to other standards and recommendations, whether pre-existing or future-developed, and extensions of any such standards and recommendations (including MPEG-I part 5 and part 9). Unless indicated otherwise, or technically precluded, the aspects described in the present application may be used individually or in combination.

The present invention relates to encoding/decoding point cloud geometry data represented by ordered coarse points of a coarse representation occupying some discrete positions of a set of discrete positions of a two-dimensional space.

For example, in the working group ISO/IEC JTC 1/SC 29/WG 7 on MPEG 3D Graphics Coding, a new codec named L3C2 (Low-Latency Low-Complexity Codec) is being considered to improve, relative to the G-PCC codec, the coding efficiency of Lidar-sensed point clouds. The codec L3C2 provides an example of a two-dimensional representation of the points of a point cloud namely a coarse representation. A description of the code can be found in the output document of the Working Group in N00167, ISO/IEC JTC 1/SC 29/WG 7, MPEG 3D Graphics Coding, "Technologies under Consideration in G-PCC", August 31st 2021.

Basically, for each sensed point $P_n$ of the point cloud, a sensor index $\lambda_n$, associated with a sensor that sensed the point $P_n$ and an azimuthal angle $\phi_n$ representing a sense angle of said sensor are obtained by converting 3D cartesian coordinates $(x_n,y_n,z_n)$ representing the 3D location of the sensed point $P_n$. Points of the point cloud are then ordered based on the azimuthal angles $\phi_n$ and the sensor indices $\lambda_n$, for example, according to a lexicographic order based first on the azimuthal angle and then on the sensor index. The order index $o(P_n)$ of a point $P_n$ is then obtained by:

$$o(P_n) = \phi_n{}^*K + \lambda_n$$

where K is the number of sensors.

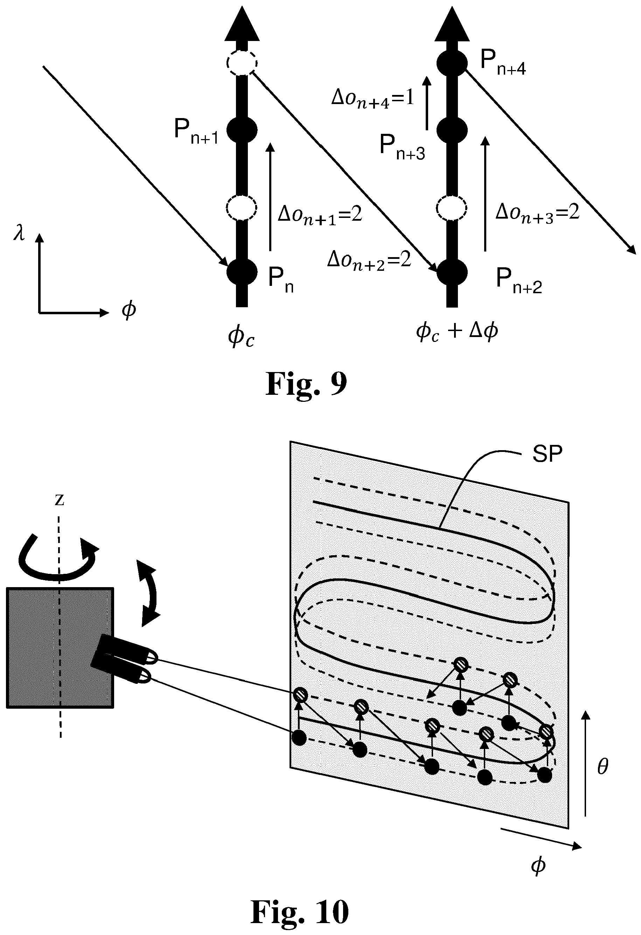

**Figure 9** shows schematically ordered coarse points of a coarse representation. Five points of the point cloud have been sensed. Each of these five points are coarsely represented by a coarse point (black point) in the coarse representation: two coarse points $P_n$ and $P_{n+1}$ represent two points of the point cloud sensed at time $t_1$ with an angular angle $\phi_c$ (among the $\phi_i$'s) and three coarse points represent three points of the point cloud sensed at time $t_2$ with an angular angle $\phi_c + \Delta\phi$. A coarse point that represents a sensed point of the point cloud is namely an occupied coarse point and coarse point that do not represent a sensed point of the point cloud is namely an unoccupied coarse point. Because the points of the point cloud are represented by occupied coarse points in the coarse representation, the order indices associated with the points of the point cloud are also the order indices associated with the occupied coarse points.

The coarse representation of the point cloud geometry data may then be defined in a two-dimensional coordinate $(\phi,\lambda)$ space.

The coarse representation may also be defined for any types of sensors head including rotating (spinning) or non-rotating sensors heads. Its definition is based on a sensing path defined from sensor characteristics in a two-dimensional angular coordinate $(\phi, \theta)$ space comprising an azimuthal coordinate $\phi$ representative of an azimuthal angle representing a sensing angle of a sensor relative to a referential and an elevation coordinate $\theta$ representative of an elevation angle of a sensor relative to a horizontal referential plane. The sensing path is used to sense the points of the point cloud according to ordered coarse points representing potential locations of sensed points of the point cloud. Each coarse point is defined from one sample index s associated with a sensing time instant along the sensing path and one sensor index $\lambda$ associated with a sensor.

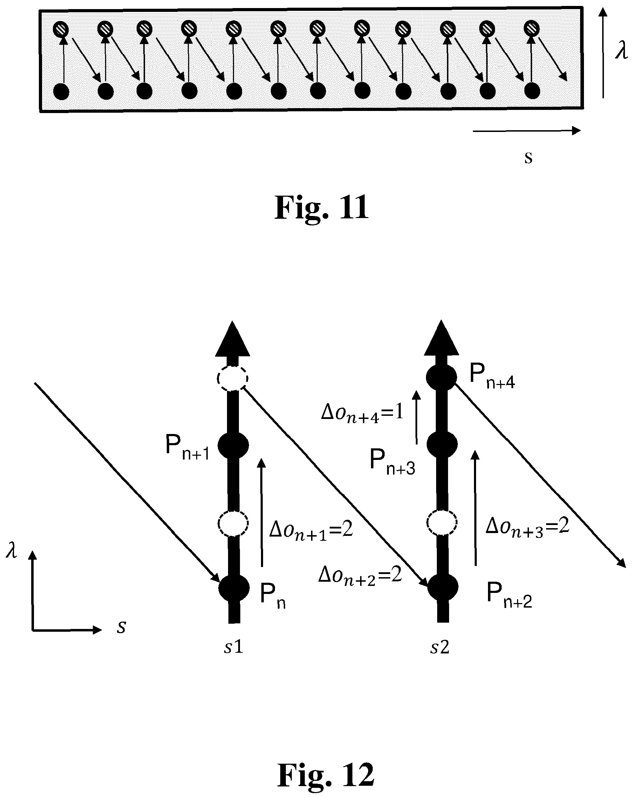

On **Figure 10,** a sensor head comprising two sensors is used. The sensing paths followed by the two sensors are represented in dash lines. For each sample index s (each sensing time instant), two coarse points are defined. The coarse points associated with the first sensor are represented by black shaded points on **Figure 10** and the coarse points associated with the second sensor are represented by a black hashed point. Each of these two coarse points belongs to a sensor sensing path (dash line) defined from the sensing path SP. **Figure 11** shows schematically a representation of ordered coarse points in the two-dimensional coordinate $(s,\lambda)$ space. Arrows on **Figures 10** and **11** illustrate the links between two successive ordered coarse points.

An order index o(P) is associated with each coarse point according to the rank of said coarse point among the ordered coarse points:

$$o(P) = \lambda + s{}^*K$$

where K is the number of sensors of a set of sensors or the number of different positions of a single sensor for a same sample index, $\lambda$ is the sensor index of the sensor that sensed the point P of the point cloud at the sensing time instant **s.**

**Figure 12** illustrates ordered coarse points of a coarse representation, five occupied coarse points are represented (black circles): two coarse points $P_n$ and $P_{n+1}$ are occupied by two points of the point cloud sensed at a sensing time instant $t_1$ (corresponding to a sample index si) and three coarse points are occupied by three points of the point cloud sensed at a sensing time instant t2 (corresponding to a sample index $s_2$).

The coarse representation of the point cloud geometry data may then be defined in a two-dimensional coordinate $(s,\lambda)$ space.

Independently of the two-dimensional space in which a coarse representation of point cloud geometry data is defined, encoding point cloud geometry data comprises encoding the occupancy data of occupied coarse points of the coarse representation by encoding order index differences $\Delta o$ representing, each, a difference between order indices of two consecutive occupied coarse points $P_{-1}$ and P:

$$\Delta o = o(P) - o(P_{-1})$$

On **Figure 9,** assuming the coordinates of a first occupied coarse point $P_n$ in the two-dimensional coordinate $(\phi,\lambda)$ space are known beforehand, a first order index difference $\Delta o_{n+1}$ is obtained as a difference between the order index $o(P_{n+1})$ associated with the occupied coarse point $P_{n+1}$ and the order index $o(P_n)$ associated with the occupied coarse point $P_n$. A second order index difference $\Delta o_{n+2}$ is obtained as a difference between the order index $o(P_{n+2})$ associated with another occupied coarse point $P_{n+2}$ and the order index $o(P_{n+1})$ associated with $P_{n+1}$, and so on.

On **Figure 12,** assuming the coordinates of the first occupied coarse point $P_n$ in the two-dimensional coordinate $(s, \lambda)$ space are known beforehand, a first order index difference $\Delta o_{n+1}$ is obtained as a difference between the order index $o(P_{n+1})$ of the occupied coarse point $P_{n+1}$ and the order index $o(P_n)$ of the occupied coarse point $P_n$. In the example $\Delta o_{n+1} = 2$ because a coarse point is not occupied (white circle). A second order index difference $\Delta o_{n+2}$ is obtained as a difference between the order index $o(P_{n+2})$ of another occupied coarse point $P_{n+2}$ and the order index $o(P_{n+1})$ of the occupied coarse point $P_{n+1}$, and so on.

The order index $o(P_1)$ of the first coarse point occupied by the first sensed point $P_1$ of the point cloud may be directly encoded into the bitstream B. This is equivalent to arbitrary setting the order index of a virtual zero-th point to zero, i.e. $o(P_0) = 0$, and coding $\Delta o_1 = o(P_1) - o(P_0) = o(P_1)$.

Given the order index $o(P_1)$ of the first coarse point occupied by the first sensed point $P_1$ of the point cloud, and order differences $\Delta o$, one can recursively reconstruct the order index $o(P)$ of any occupied coarse point occupied by a sensed point P of the point cloud by:

$$o(P) = o(P_{-1}) + \Delta o$$

In brief, the method of encoding comprises obtaining at least one first binary data $f_j$ representative of an order index difference representative of a difference between order indices of two consecutive occupied coarse points and encoding each of said at least one first binary data fj as follows. The one first binary data $f_j$ may signal if the order index difference is equal some specific value $V_j$ such that the first binary data $f_j$ signals the occupancy of a current coarse point $P_j$ at order

$$o(P_j) = o(P_{-1}) + V_j$$

wherein $P_{-1}$ is the first occupied coarse point within the two consecutive occupied coarse points.

Firstly, coordinates of a current coarse point of a coarse representation within the two-dimensional space are obtained. Next, a series (indexed by n) of at least one second binary data $f_{j,n}$ is obtained based on based on occupancy data of precedingly encoded coarse points belonging to a causal neighborhood of the current coarse point, i.e. the series of at least one second binary data $f_{j,n}$ is representative of an occupancy data of at least one neighboring coarse point belonging to a causal neighborhood of the current coarse point. Next, a coordinate difference between a first coordinate of the current coarse point and a first coordinate of a preceding occupied coarse point in the two-dimensional space, is obtained. The current and preceding occupied coarse points have a same second coordinate in the two-dimensional space. Finally, the binary fj data of said at least one first binary data representative of the order index difference is entropy encoded, into the bitstream, based on the series $f_{j,n}$ of at least one second binary data and the coordinate difference.

The entropy coding depends on a neighborhood and a coordinate difference associated with a current coarse point. Such entropy coding is advantageous because both the neighborhood and the coordinate difference are very efficient to anticipate the value of the first binary data $f_j$ that signals the occupancy data of a current coarse point. Therefore, it is advantageous to combine both neighborhood information and coordinate difference to further improve the entropy coding.

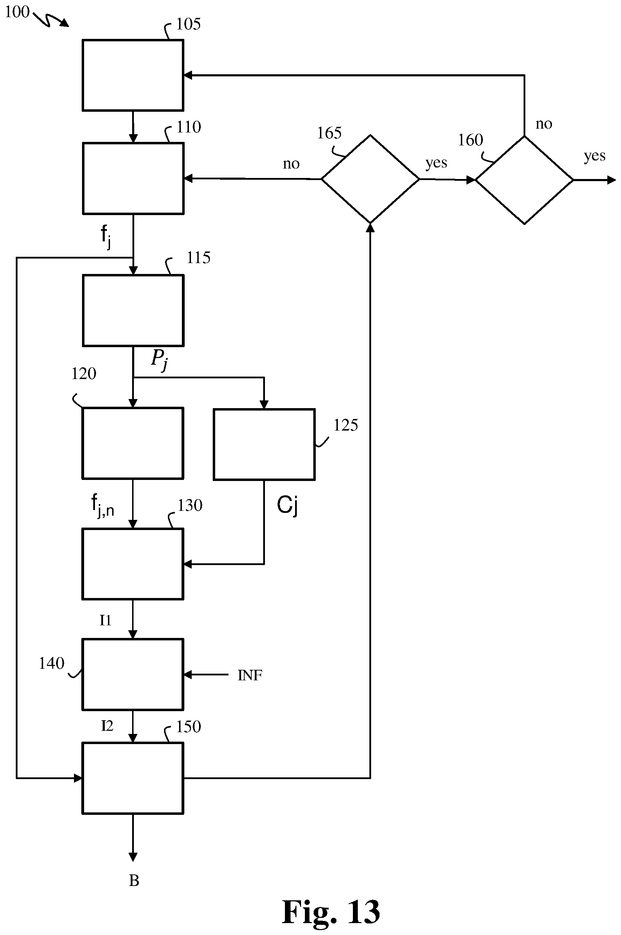

**Figure 13** shows a schematic block diagram of steps of a method 100 of encoding point cloud geometry data into a bitstream of encoded point cloud data in accordance with at least one exemplary embodiment.

In step 105, at least one first binary data $f_j$ representative of an order index difference $\Delta o$ is obtained. The order index difference $\Delta o$ is representative of a difference between order indices of two consecutive occupied coarse points in a coarse representation.

In one exemplary embodiment of step 105, said at least one first binary data fj is obtained by unary coding the order index difference $\Delta o$.

For example, a unary representation of an order index difference $\Delta o$ equals to 8, may comprise nine first binary data $f_0$ to $f_7$ all not equal to a value PV (typically PV=1) except the last one $f_8$ which equals to PV.

In step 110, one of said at least one first binary data fj is considered.

In step 115, coordinates of a current coarse point $P_j$ within the two-dimensional space are obtained. The current coarse point $P_j$ has a first coordinate $\phi_j$ and a second coordinate $\lambda_j$ in the two-dimensional coordinate $(\phi, \lambda)$ space and a first coordinate $s_j$ and a second coordinate $\lambda_j$ in the two-dimensional coordinate $(s, \lambda)$ space.

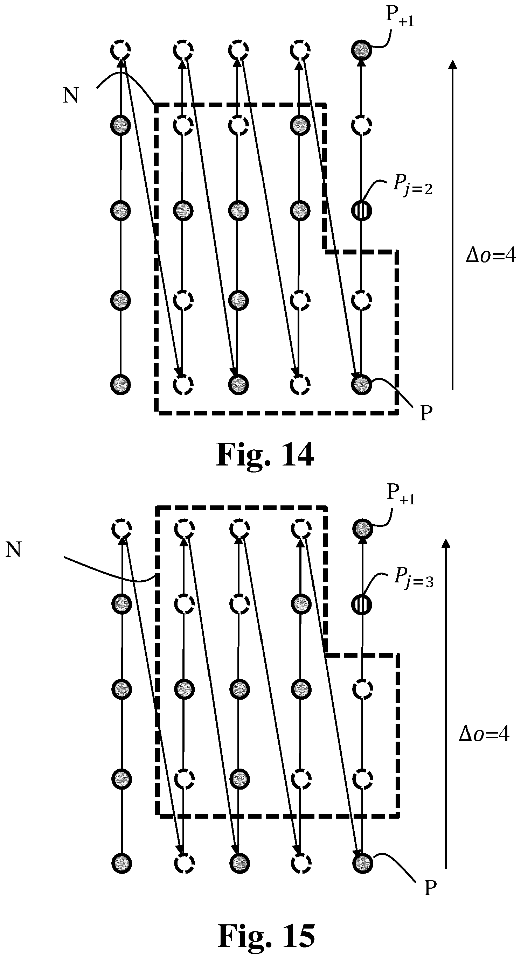

On **Figure 14,** unoccupied coarse points are delimited by dotted lines and grey points represent occupied coarse points. The order index difference $\Delta o$ equals 4 on the shown example and is unary encoded by 3 first binary data $f_0, ..., f_2$ not equals to the value PV and one first binary data $f_3$ equals to the value PV. A current coarse point $P_j$ (hatched point) is located between an occupied coarse point P and a next occupied coarse point $P_{+1}$. The index **j** indicates that the current coarse point $P_j$ is the j-th unoccupied coarse point after the occupied coarse point P. On **Figure 14,** the

current coarse point $P_j$ is the second (j=2) coarse point from the occupied point P and on **Figure 15,** the current coarse point $P_j$ is the third (j=3) coarse point from the occupied point P. A causal neighborhood N is defined around the current coarse point $P_j$. The causal neighborhood may vary depending on the index j when encoding all the first binary data $f_j$ of the unary representation of an order index difference. A different neighborhood occupancy configuration is used to encode each of said first binary data $f_j$ as depicted on **Figures 14** and **15.** The current coarse point $P_j$ is the next occupied coarse point $P_{+1}$ when j=4 in this illustrative and no limitative example.

In step 120, a series (indexed by n) of at least one second binary data $f_{j,n}$ is obtained based on occupancy data of precedingly encoded coarse points belonging to a causal neighborhood N of the current coarse point $P_j$. The series of at least one second binary data $f_{j,n}$ is representative of an occupancy data of at least one neighboring coarse point belonging to the causal neighborhood N of the current coarse point $P_j$.

In step 125 a coordinate difference Cj between a first coordinate of the current coarse point $P_j$ and a first coordinate of a preceding occupied coarse point $P_{prec}$ in the two-dimensional space is obtained. Said current and preceding occupied coarse points have a same second coordinate $\lambda_j$ in said two-dimensional space.

For example when the coarse representation is defined in the two-dimensional coordinate $(\phi, \lambda)$ space, the coordinate difference Cj associated with a first binary data fj is calculated between the first coordinate $\phi_j$ and a first coordinate $\phi_{prec,j}$ associated with a preceding occupied coarse point $P_{prec}$ with a second coordinate $\lambda_j$. The current occupied coarse point P is never considered in the set of preceding occupied coarse points from which the preceding occupied coarse point $P_{prec}$ is determined:

$$C_j = \phi_j - \phi_{prec,j}$$

For example, when the coarse representation is defined in the two-dimensional coordinate $(s, \lambda)$ space, the coordinate difference Cj associated with a first binary data $f_j$ is calculated between a first coordinate $s_j$ and a first coordinate $s_{prec,j}$ associated with a preceding occupied coarse point $P_{prec}$ with a second coordinate $\lambda_j$. The current occupied coarse point P is never considered in the set of preceding occupied coarse points from which the preceding occupied coarse point $P_{prec}$ is determined:

$$C_j = s_j - s_{prec,j}$$

In one exemplary embodiment of step 125, the preceding occupied coarse point $P_{prec}$ is the penultimate occupied coarse point $P_{penult}$.

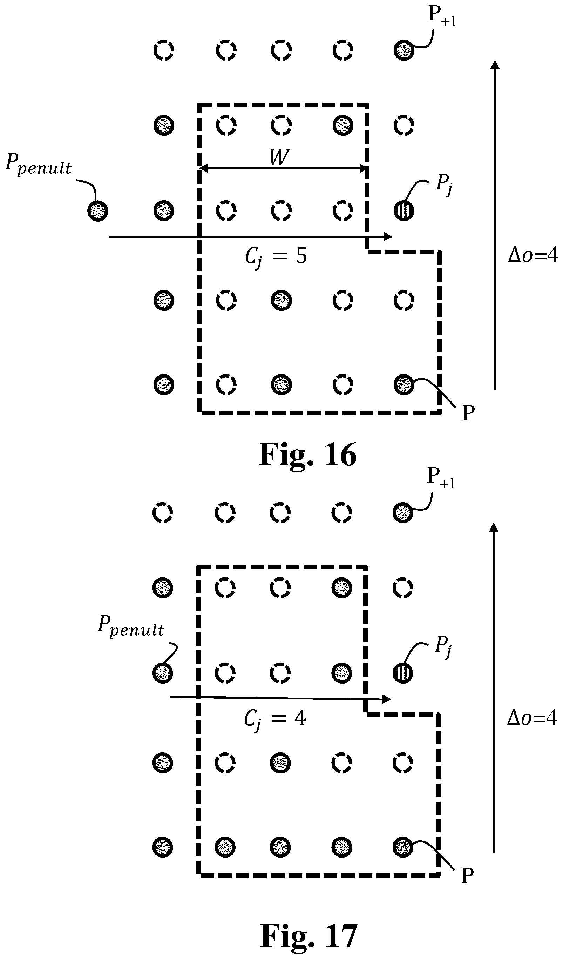

**Figures 16 and 17** show two examples of two neighborhood occupancy configurations where the penultimate occupied coarse point $P_{penult}$ does not belong to the causal neighborhood (delimited by a dotted line). In this case, the coordinate difference Cj is not redundant with the neighborhood occupancy configuration.

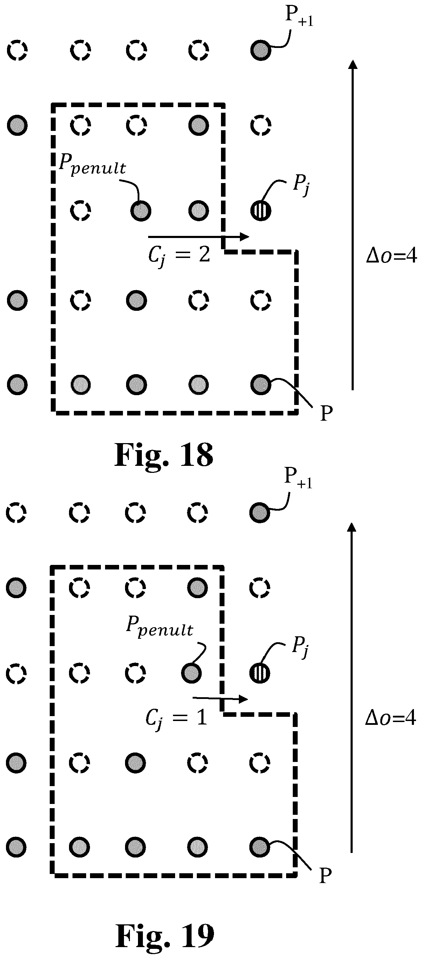

**Figures 18 and 19** show two examples of two neighborhood occupancy configurations where the penultimate occupied coarse point $P_{penult}$ does belong to the causal neighborhood. In **Figure 18,** the coordinate difference Cj is completely contained in the neighborhood occupancy configuration. However, in **Figure 19** where preceding and penultimate occupied coarse points are equal, the neighborhood occupancy configuration cannot detect duplicate point. One notices that neighborhood occupancy configurations of **Figures 17** and **19** are the same but the coordinate difference Cj does differ.

If a neighborhood width W of the causal neighborhood N, defined for example from the first coordinate of the current occupied coarse point (W=3 on **Figure 16),** is large enough to ensure that the penultimate occupied coarse point $P_{penult}$ belongs to the neighborhood, then the coordinate difference Cj is already contained in the neighborhood occupancy configuration.

In some examples, a coordinate differenced Cj as large as 6, 7 or even 8 do provide solid prediction of the first binary data fj.

Preferably, a neighborhood height of 5 including the current sensor "line" (coarse points corresponding to a same sensor with sensor index $\lambda_j$) plus two "lines" below (sensors with sensor index $\lambda_{j-1}$ and $\lambda_{j-1}$) plus two lines above (sensors with sensor index $\lambda_{j+1}$ and $\lambda_{j+1}$) has observed to be an adequate size to anticipate the value of the first binary data fj. Consequently, ensuring that the penultimate occupied coarse point belongs to the causal neighborhood would require at least 6*5+2=32 neighbors, thus leading to $2^{32}$ = 1 billion possible neighborhood occupancy configurations.

In one exemplary embodiment of step 125, a neighborhood coordinate difference $C_{j,w}$ is obtained based on a comparison of the coordinate difference Cj with the neighborhood width W, and the first binary data fj is entropy encoded (step 150) based on the series of at least one second binary data $f_{j,n}$ and the neighborhood coordinate difference $C_{j,w}$. For example, the neighborhood coordinate difference $C_{j,w}$ is given by:

$$C_{j,w} = \max(C_j , W).$$

This variant ensures that the case when preceding occupied coarse point $P_{prec}$ belongs to the causal neighborhood N is detected by $C_{j,w}$ being equal to W and, in this case, the redundancy between the coordinate difference Cj and the causal neighborhood N is removed.

In one variant, the neighborhood coordinate difference $C_{j,w}$ is equal to a particular value if and only if the preceding occupied coarse point $P_{prec}$ belongs to the causal neighborhood N.

For example, the neighborhood coordinate difference $C_{j,w}$ is defined by

$$C_{j,w} = \max(C_j , W) - W.$$

and the preceding occupied coarse point $P_{prec}$ belongs to the causal neighborhood N if and only if $C_{j,w} = 0$. The neighborhood coordinate difference $C_{j,w}$ is thus contained in a given neighborhood occupancy configuration. Otherwise, when the neighborhood coordinate difference $C_{j,w} > 0$, the coordinate difference Cj is simply retrieved by $Cj = C_{j,w} + W$.

In step 150, the first binary data fj is entropy encoded based on the series of at least one second binary data $f_{j,n}$ and either the coordinate difference Cj or the neighborhood coordinate difference $C_{j,w}$.

The encoding method processes to the encoding of a next first binary data fj of the at least one first binary data $f_j$ representative of the order index difference ∆o (step 165). When all first binary data fj of the at least one first binary data fj are encoded, at least one first binary data $f_j$ representative of another order index difference representative of a difference between order indices of two other consecutive occupied coarse points is decoded is encoded (step 160), and the method ends when all occupied coarse points have been considered.

In one exemplary embodiment, the method 100 further comprises steps 130 and 140.

In step 130, a first index I1 is obtained from the series of at least one second binary data $f_{j,n}$ and either the coordinate difference Cj or the neighborhood coordinate difference $C_{j,w}$. The first index I1 is representative of a neighborhood occupancy configuration among a first set of neighborhood occupancy configuration indices representative of potential neighborhood occupancy configurations. A neighborhood occupancy configuration index indicates which neighbors of the causal neighborhood are occupied by at least one point of the point cloud.

In one exemplary embodiment of step 130, the first index I1 may be a word made of a concatenation of the at least one second binary data $f_{j,n}$ (indexed by n) indicating the occupancy data of each of the coarse points belonging to the causal neighborhood.

In one variant, the concatenation may be performed in a predetermined order of said coarse points.

In step 140, a second index I2 is obtained by applying an index range reduction function F to the first index 11. The second index I2 is representative of the neighborhood occupancy configuration among a second set of neighborhood occupancy configuration indices representative of the potential neighborhood occupancy configurations. The index range reduction function F is adapted to map each index of the first set of neighborhood occupancy configuration indices to an index of the second set of neighborhood occupancy configuration indices. The range (cardinality) of the second set of neighborhood occupancy configuration indices being lower than the range (cardinality) of the first set of neighborhood occupancy configuration indices.

According to said exemplary embodiment of the method 100, in step 150, the first binary data $f_j$ is then entropy encoded based on the second index 12.

An ideal index range reduction function should be easy to compute and it should take a high number of entries and "randomly mixes" neighborhood occupancy configurations. The rationale behind randomness being an efficient choice is as follows. For a given type of point clouds, a few neighborhood occupancy configurations will be visited much more often than the vast majority of others. For example, Augmented Reality/Virtual Reality point clouds representing surfaces will tend to visit neighborhood occupancy configurations with occupied adjacent neighbors. Sparse point clouds will tend to visit neighborhood occupancy configurations with a few occupied neighbors. Volumetric point clouds will tend to visit neighborhood occupancy configurations with most of neighbors being occupied. By a random mixing nature of the index range reduction function, none of the types of point cloud is privileged and it is likely that often visited configurations do not collide by having a same reduced neighborhood occupancy configuration after having applied the function. Therefore, visiting statistics are well preserved. Practically, an index range reduction function may be selected to ensure that visiting statistics are preserved for a large class of realistic point clouds.

The index amplitude reduction function F should output a number of possible indices, i.e. a cardinality of the second set of neighborhood occupancy configuration indices, sufficiently big to avoid mixing unrelated neighboring statistics and, thus, to preserve compression capability. On the other hand, the index amplitude reduction function F should output a number of possible indices sufficiently small to obtain a practical implementation in terms of tracking of the statistics and to avoid dilution of the statistics. Typically, the cardinality of the second set of neighborhood occupancy configuration indices is in the range of a few dozens to a few thousand possible neighborhood occupancy configuration indices.

In one exemplary embodiment of step 140, the index range reduction function F may be a hashing function.

In a preferred exemplary embodiment of step 140, the hashing function may be a modulo function relative to an integer p:

$$I2 = I1 \; mod \; p$$

where p is preferably a prime number. By doing so there are p possible second configuration indices.

In one exemplary embodiment of step 140, the hashing function may be a linear combination follows by a modulo relative to an integer M:

$$I2 = a*I1 \; mod \; M$$

where a and M are preferably relatively prime numbers. By doing so there are M possible hashed configuration indices.

Any other hashing function may be suitable as soon as it is easy to compute and mixes well the neighborhood occupancy configurations.

The occupancies information of neighbors may not be the only useful information for encoding a first binary data of at least one first binary data representative of an order index difference. Another information INF may be used in combination with the occupancy information of neighbors.

In one variant, the information INF is based on inter frame prediction that may provide a prediction of the first binary data based on the motion of points of the point cloud.

In one variant, the information INF is another prediction information that may be the position of the coarse points ($P_j$) associated with the first binary data ($f_j$) to be encoded within the coarse representation. For example, the sensor index $\lambda_j$ carries information useful to the anticipation of the first binary data value because different sensors pointing to different elevations have different occupancy statistics.

In one exemplary embodiment of the method 100, the coordinate difference Cj or the neighborhood coordinate difference $C_{j,w}$ is combined with a neighborhood occupancy configuration associated with the first index I1.

In one exemplary embodiment of the method 100, the coordinate difference Cj or $C_{j,w}$ is combined with a neighborhood occupancy configuration associated with the second index I2.

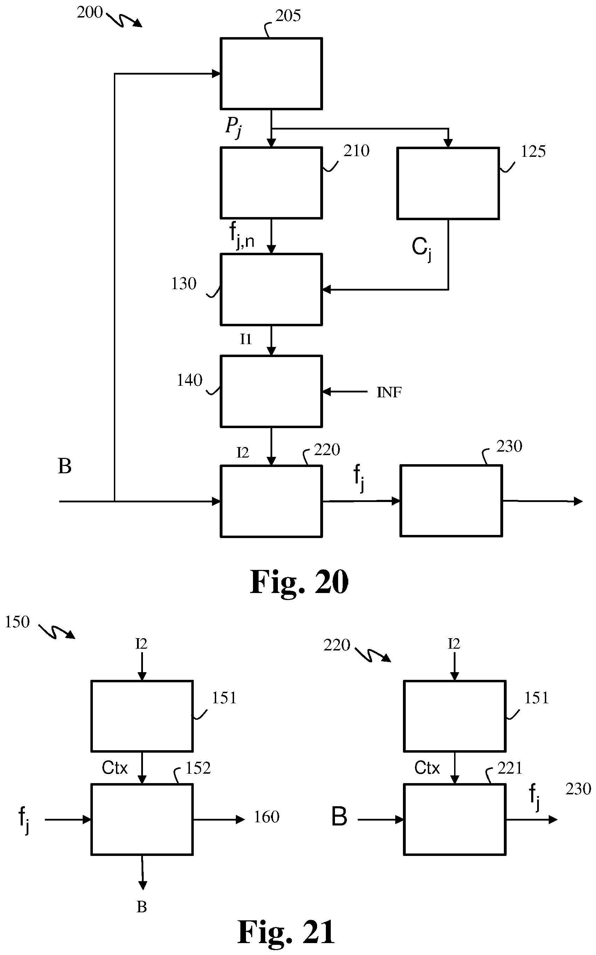

**Figure 20** shows a schematic block diagram of steps of a method 200 of decoding point cloud geometry data from a bitstream of encoded point cloud data in accordance with at least one exemplary embodiment.

The decoding method 200 is straightforwardly deduced from the encoding method 100.

In step 205, coordinates of a current coarse point $P_j$ within a two-dimensional space are obtained. The current coarse point $P_j$ has a first coordinate $\phi_j$ and a second coordinate $\lambda_j$ in the two-dimensional coordinate ($\phi,\lambda$) space and a first coordinate $s_j$ and a second coordinate $\lambda_j$ in the two-dimensional coordinate ($s,\lambda$) space.

In step 210, a series (indexed by n) of at least one second binary data $f_{j,n}$ is obtained based on occupancy data of precedingly decoded coarse points belonging to a causal neighborhood of the current coarse point $P_j$). The series of at least one second binary data $f_{j,n}$ is representative of an occupancy data of at least one neighboring coarse point belonging to a causal neighborhood N of the current coarse point $P_j$.

In step 125, a coordinate difference Cj or a neighborhood coordinate difference $C_{j,w}$ is as above discussed.

In step 220, the first binary data fj is entropy decoded based on the series of at least one second binary data $f_{j,n}$ and the coordinate difference Cj or the neighborhood coordinate difference $C_{j,w}$.

Then, the decoding method processes to the decoding of a next first binary data $f_j$ of the at least one first binary data $f_j$ representative of the order index difference $\Delta o$. When all first binary data fj of the at least one first binary data fj are decoded, at least one first binary data $f_j$ representative of another order index difference representative of a difference between order indices of two other consecutive occupied coarse points is decoded, and the method ends when all occupied coarse points have been considered.

In one exemplary embodiment, the method 200 further comprises steps 130 and 140 as above discussed.

According to said exemplary embodiment of the method 200, in step 220, the first binary data $f_j$ is entropy decoded from the bitstream B based on the second index I2.

In one exemplary embodiment of the method 200, the coordinate difference Cj or the neighborhood coordinate difference $C_{j,w}$ is combined with a neighborhood occupancy configuration associated with the first index I1.

In one exemplary embodiment of the method 200, the coordinate difference Cj or $C_{j,w}$ is combined with a neighborhood occupancy configuration associated with the second index I2.

In one exemplary embodiment of step 150, respectively 220, a first binary data $f_j$ is encoded, respectively

decoded, by a binary arithmetic coder, respectively decoder, using a probability pr of a first binary data fj to be true (fj =1) based on the second index I2. In this case, the second index I2 may point to the 12-th element of a table T of probabilities such that pr = T[I2]. The probability T[I2] may be updated after the coding of the first binary data fj depending on its value (false vs true or 0 vs 1).

In one exemplary embodiment step 150, respectively 220, depicted on **Figure 21**, a first binary data fj is context-based adaptive entropy encoded, respectively decoded. Said context-based adaptive entropy encoding, respectively decoding may comprise selecting (step 151) a context Ctx from at least the series of at least one second binary data $f_{j,n}$ or at least the second index I2. Optionally, the context Ctx may also be selected based on the coordinate difference Cj or $C_{j,w}$.

The context Ctx may be selected from a table T of contexts based on at least the second index I2 and optionally the coordinate difference Cj or $C_{j,w}$, such that Ctx = T[I2] or Ctx = T[I2, Cj].

The context Ctx may be selected from a table T of contexts based on at least the series of at least one second binary data $f_{j,n}$ and optionally the coordinate difference Cj or Cj w, such that Ctx = T[$f_{j,n}$] or Ctx = T[$f_{j,n}$, Cj].

In step 152, the first binary data fj is context-based entropy coded into the bitstream B based on the selected context Ctx. In step 221, the first binary data $f_j$ is context-based entropy decoded based on the selected context Ctx.

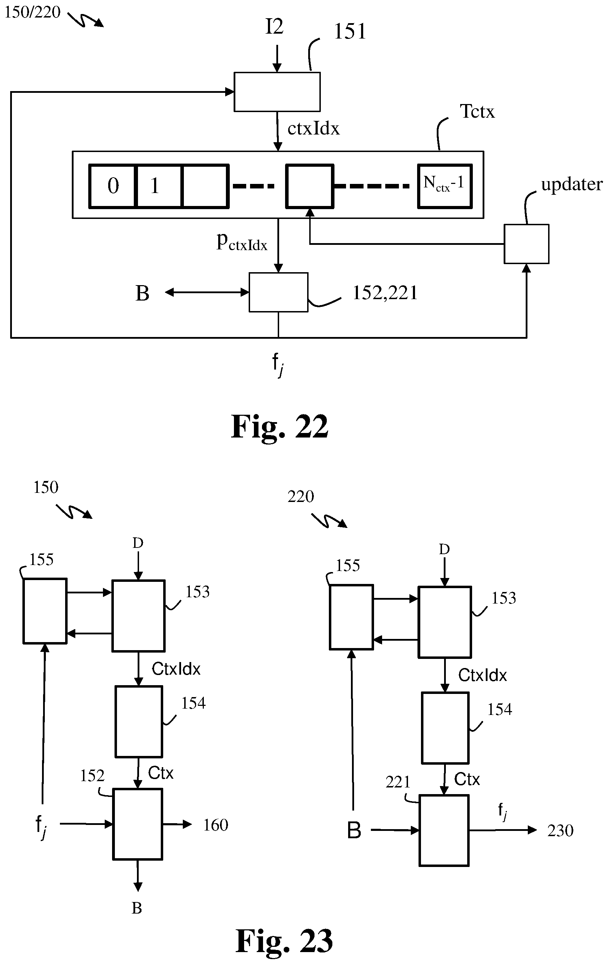

In one variant, depicted on **Figure 22,** the first binary data fj is context-based adaptive entropy encoded or decoded by a Context-Adaptive Binary Arithmetic Coder or decoder (CABAC).

In step 151, the context Ctx may be selected by some selection process based at least on the second index I2 to provide a context index ctxIdx associated with a first binary data $f_j$. The second index I2 is obtained from the series of at least one second binary data $f_{j,n}$ and optionally from the coordinate difference Cj or $C_{j,w}$. In another exemplary embodiment, the context Ctx is selected based on at least the series of at least one second binary data $f_{j,n}$ and optionally the coordinate difference Cj or $C_{j,w}$.

A context table Tctx with $N_{ctx}$ entries usually store probabilities associated with the contexts and a probability $p_{ctxIdx}$ is obtained as the ctxIdx -th entry of the context table. The context is selected based on the context index ctxIdx by

$$Ctx = Tctx[ctxIdx].$$

For example, the context index ctxIdx may be equal to the second index I2, responsive to the series of at least one second binary data $f_{j,n}$ and to the coordinate difference Cj, such that the context Ctx is selected as

$$Ctx = Tctx[I2(f_{j,n}, C_j)].$$

For example, the context index ctxIdx may correspond to the second index I2, responsive to the series of at least one second binary data $f_{j,n}$, and the coordinate difference Cj such that the context Ctx is selected as

$$Ctx = Tctx[I2(f_{j,n}), C_j].$$

For example, the context index ctxIdx may correspond to the series of at least one second binary data $f_{j,n}$ and, optionally, to the coordinate difference Cj such that the context Ctx is selected as

$$Ctx = Tctx[f_{j,n}] \text{ or } Ctx = Tctx[f_{j,n}, C_j].$$

In step 152, respectively 221, a first binary data fj is entropy encoded in the bitstream B, respectively entropy decoded from the bitstream B, using the probability $p_{ctxIdx}$.

Entropy coders are usually arithmetic coders but may be any other type of entropy coders like asymmetric numeral systems. In any case, optimal coders add -log2($p_{ctxIdx}$) bits in the bitstream B to encode fj =1 or -log2(1- $p_{ctxIdx}$) bits in the bitstream B to encode fj=0. Once the first binary data fj is encoded (decoded) the probability $p_{ctxIdx}$ is updated by using an updater taking the encoded first binary data fj and $p_{ctxIdx}$ as entries; the updater is usually performed by using updated tables. The updated probability replaces the ctxIdx-th entry of the context table Tctx. Then, another first binary data fj can be encoded, and so on. The update loop back to the context table is a bottleneck in the coding workflow as another symbol can be encoded only after the update has been performed. For this reason, the memory access to the context table must be as quick as possible and minimizing the size of the context table helps easing its hardware implementation.

A Context-Adaptive Binary Arithmetic decoder performs essentially the same operations as the Context-Adaptive Binary Arithmetic encoder except that the coded first binary data $f_j$ is decoded from the bitstream B by an entropy decoder using the probability $p_{ctxIdx}$.

Selecting an adequate context, i.e. the probability $p_{ctxIdx}$ that estimates at best the chance of the first binary data fj to be equals to 1, is essential to obtain good compression. Therefore, the context selection should use the occupancy data of at least one neighboring coarse point belonging to a causal neighborhood of a current occupied coarse point, and correlation between them to obtain this adequate context.

In one exemplary embodiment of step 150, respectively of step 220, depicted on **Figure 23**, a first binary data fj is encoded, respectively decoded, by a binary arithmetic coder, respectively decoder, with an evolving internal probability and on the base of a context Ctx selected among contexts $Ctx_1,...,Ctx_N$, like CABAC.

In step 153, a context index CtxIdx is selected based on a dependency state D of a set $D_j$, indexed by j from the first binary data $f_j$. A set $D_j$ may comprise at least either the second index I2 or the series of at least one second binary data $f_{j,n}$, and optionally the coordinate difference $C_j$ or $C_{j,w}$:

$$D_j = \{b_{j,0}, ..., b_{j,j-1}, f_{j,n}\} \text{ or } D_j = \{b_{j,0}, ..., b_{j,j-1}, f_{j,n}, C_j\}$$

$$D_j = \{b_{j,0}, ..., b_{j,j-1}, I_2\} \text{ or } D_j = \{b_{j,0}, ..., b_{j,j-1}, I_2, C_j\}$$

where $b_{j,0}, ..., b_{j,j-1}$ are the binary data representative of the occupancies of some neighboring coarse points belonging to a causal neighborhood of the current occupied coarse point.

In one variant, the set $D_j$ of dependency states may comprise predictors $P_1, ..., P_K$ for the first binary data $f_j$:

$$D_j = \{P_1, ..., P_K, f_{j,n}\} \text{ or } D_j = \{P_1, ..., P_K, f_{j,n}, C_j\}$$

$$D_j = \{P_1, ..., P_K, I_2\} \text{ or } D_j = \{P_1, ..., P_K, I_2, C_j\}$$

For example, inter frame prediction may provide a prediction of occupancy data based on the motion of points of the point cloud.

Another prediction information may be the position of the element within the geometrical representation.

Neighborhood may not be the only useful information for predicting the occupancy data of a current geometrical element.

For example, inter frame prediction may provide a prediction of occupancy data based on the motion of points of the point cloud.

Another prediction information may be the position of the current occupied coarse point in the coarse representation.

For example, the sensor index $\lambda_j$ carries information useful to the anticipation of occupancy data because different sensors pointing to different elevations have different occupancy statistics.

In one embodiment of step 153 of **Figure 23,** the context index CtxIdx may be an entry of a context index table L :

$$CtxIdx = L[D]$$

where the context index table L has as many entries as the cardinality of the set $D_j$ of dependency states.

In step 154, a context table Tctx with $N_{ctx}$ entries stores the probabilities associated with the contexts, and a context Ctx associated with a probability $p_{ctxIdx}$ is obtained as the ctxIdx-th entry of the context table by:

$$Ctx = Tctx[CtxIdx].$$

In step 152, the first binary data fj is encoded in the bitstream B by an entropy coder using the probability $p_{ctxIdx}$ as above discusses.

In step 221, the first binary data fj is decoded from the bitstream B by an entropy decoder using the probability $p_{ctxIdx}$ as above discussed.

In step 155, the D-th entry of the context index table L[D] is updated from the encoded binary data fj to a new value $L_{updated}[D]$.

In one variant, the update may be performed based on a model of a memory channel such as

$$L_{updated}[D] = (M*L[D] + f_j) / (M+1)$$

where M is the length of the memory and the first binary data $f_j$ value is either 0 or 1 depending on the occupancy data of the current element.

In one variant, a memory channel may be implemented by using two other fixed look Up Tables LM0 and LM1 by

$$L_{updated}[D] = LM0[L[D]] \quad \text{if } f_j = 0,$$

$$L_{updated}[D] = LM1[L[D]] \quad \text{if } f_j = 1.$$

The associated decoder performs essentially the same operations the encoder except that the encoded first binary data $f_j$ is decoded from the bitstream B by an entropy decoder using the probability $p_{ctxIdx}$.

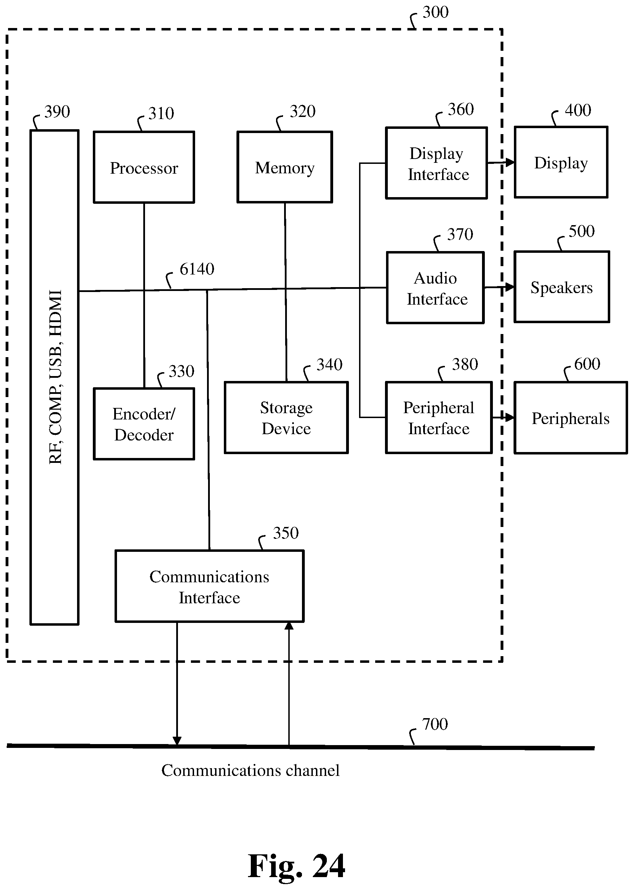

**Figure 24** shows a schematic block diagram illustrating an example of a system in which various aspects and exemplary embodiments are implemented.

System 300 may be embedded as one or more devices including the various components described below. In various embodiments, the system 300 may be configured to implement one or more of the aspects described in the present application.

Examples of equipment that may form all or part of the system 300 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. Elements of system 300, singly or in combination, may be embodied in a single integrated circuit (IC), multiple ICs, and/or discrete components. For example, in at least one embodiment, the processing and encoder/decoder elements of system 300 may be distributed across multiple ICs and/or discrete components. In various embodiments, the system 300 may be communicatively coupled to other similar systems, or to other electronic devices, via, for example, a communications bus or through dedicated input and/or output ports.

The system 300 may include at least one processor 310 configured to execute instructions loaded therein for implementing, for example, the various aspects described in the present application. Processor 310 may include embedded memory, input output interface, and various other circuitries as known in the art. The system 300 may include at least one memory 320 (for example a volatile memory device and/or a non-volatile memory device). System 300 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples.

The system 300 may include an encoder/decoder module 330 configured, for example, to process data to provide encoded/decoded point cloud geometry data, and the encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 300 or may be incorporated within processor 310 as a combination of hardware and software as known to those skilled in the art.

Program code to be loaded onto processor 310 or encoder/decoder 330 to perform the various aspects described in the present application may be stored in storage device 340 and subsequently loaded onto memory 320 for execution by processor 310. In accordance with various embodiments, one or more of processor 310, memory 320, storage device 340, and encoder/decoder module 330 may store one or more of various items during the performance of the processes described in the present application. Such stored items may include, but are not limited to, a point cloud frame, encoded/decoded geometry/attributes videos/images or portions of the encoded/decoded geometry/attribute video/images, a bitstream, matrices, variables, and intermediate or final results from the processing of equations, formulas, operations, and operational logic.

In several embodiments, memory inside of the processor 310 and/or the encoder/decoder module 330 may be used to store instructions and to provide working memory for processing that may be performed during encoding or decoding.

In other embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several embodiments, an external non-volatile flash memory may be used to store the operating system of a television. In at least one embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), HEVC (High Efficiency Video coding), VVC (Versatile Video Coding), or MPEG-I part 5 or part 9.

The input to the elements of system 300 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, and/or (iv) an HDMI input terminal.

In various embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain embodiments, (iv) demodulating the down-converted and band-limited signal, (v) performing error correction, and (vi) demultiplexing to select the desired stream of data packets. The RF portion of various embodiments may include one or more elements to perform these functions, for example, frequency selectors, signal selectors, band-limiters, channel selectors, filters, downconverters, demodulators, error correctors, and de-multiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various embodiments, the RF portion may include an antenna.

Additionally, the USB and/or HDMI terminals may include respective interface processors for connecting system 300 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 300 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 300 may include communication interface 350 that enables communication with other devices via communication channel 700. The communication interface 350 may include, but is not limited to, a transceiver configured to transmit and to receive data over communication channel 700. The communication interface 350 may include, but is not limited to, a modem or network card and the communication channel 700 may be implemented, for example, within a wired and/or a wireless medium.

Data may be streamed to the system 300, in various embodiments, using a Wi-Fi network such as IEEE 802.11. The Wi-Fi signal of these embodiments may be received over the communications channel 700 and the communications interface 350 which are adapted for Wi-Fi communications. The communications channel 700 of these embodiments may be typically connected to an access point or router that provides access to outside networks including the Internet for allowing streaming applications and other over-the-top communications.

Other embodiments may provide streamed data to the system 300 using a set-top box that delivers the data over the HDMI connection of the input block 390.

Still other embodiments may provide streamed data to the system 300 using the RF connection of the input block 390.

The streamed data may be used as a way for signaling information used by the system 300. The signaling information may comprise the bitstream B and/or information such a number of points of a point cloud, coordinates and/or sensor setup parameters.

It is to be appreciated that signaling may be accomplished in a variety of ways. For example, one or more syntax elements, flags, and so forth may be used to signal information to a corresponding decoder in various embodiments.

The system 300 may provide an output signal to various output devices, including a display 400, speakers 500, and other peripheral devices 600. The other peripheral devices 600 may include, in various examples of embodiments, one or more of a stand-alone DVR, a disk player, a stereo system, a lighting system, and other devices that provide a function based on the output of the system 300.

In various embodiments, control signals may be communicated between the system 300 and the display 400, speakers 500, or other peripheral devices 600 using signaling such as AV.Link (Audio/Video Link), CEC (Consumer Electronics Control), or other communications protocols that enable device-to-device control with or without user intervention.

The output devices may be communicatively coupled to system 300 via dedicated connections through respective interfaces 360, 370, and 380.

Alternatively, the output devices may be connected to system 300 using the communications channel 700 via the communications interface 350. The display 400 and speakers 500 may be integrated in a single unit with the other components of system 300 in an electronic device such as, for example, a television.

In various embodiments, the display interface 360 may include a display driver, such as, for example, a timing controller (T Con) chip.

The display 400 and speaker 500 may alternatively be separate from one or more of the other components, for example, if the RF portion of input 390 is part of a separate set-top box. In various embodiments in which the display 400 and speakers 500 may be external components, the output signal may be provided via dedicated output connections, including, for example, HDMI ports, USB ports, or COMP outputs.

In **Fig. 1-24,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing a point cloud, a video or an image or other communication devices. As should be clear, the equipment may be mobile and even installed in a mobile vehicle.

Computer software may be implemented by the processor 310 or by hardware, or by a combination of hardware and software. As a non-limiting example, the embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof.

Moreover, when an element is referred to as being "responsive" or "connected" to another element, it may be directly responsive or connected to the other element, or intervening elements may be present. In contrast, when an element is referred to as being "directly responsive" or "directly connected" to other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of this application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout this application are not necessarily all referring to the same embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the specification are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received point cloud frame (including possibly a received bitstream which encodes one or more point cloud frames) in order to produce a final output suitable for display or for further processing in the reconstructed point cloud domain. In various embodiments, such processes include one or more of the processes typically performed by a decoder. In various embodiments, such processes also, or alternatively, include processes performed by a decoder of various implementations described in this application, for example,

As further examples, in one embodiment "decoding" may refer only to de-quantizing, in one embodiment "decoding" may refer to entropy decoding, in another embodiment "decoding" may refer only to differential decoding, and in another embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input point cloud frame in order to produce an encoded bitstream. In various embodiments, such processes include one or more of the processes typically performed by an encoder. In various embodiments, such processes also, or alternatively, include processes performed by an encoder of various implementations described in this application.

As further examples, in one embodiment "encoding" may refer only to quantizing, in one embodiment "encoding" may refer only to entropy encoding, in another embodiment "encoding" may refer only to differential encoding, and in another embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, this application may refer to "obtaining" various pieces of information. Obtaining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

Also, as used herein, the word "signal" refers to, among other things, indicating something to a corresponding decoder. For example, in certain embodiments the encoder signals a particular information such a number of points of the point cloud or coordinates or sensor setup parameters. In this way, in an embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of encoding, into a bitstream, point cloud geometry data represented by ordered coarse points occupying some discrete positions of a set of discrete positions of a two-dimensional space, wherein the method comprises obtaining (105) at least one first binary data (fj) representative of an order index difference representative of a difference between order indices of two consecutive occupied coarse points and encoding each of said at least one first binary data (fj) by:

   - obtaining (115) coordinates of a current coarse point ($P_j$) within the two-dimensional space;
   - obtaining (120) a series of at least one second binary data ($f_{j,n}$) based on occupancy data of precedingly encoded coarse points belonging to a causal neighborhood of the current coarse point ($P_j$);
   - obtaining (125) a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
   - entropy encoding (150), into the bitstream, the first binary data (fj) based on the series of at least one second binary data ($f_{j,n}$) and the coordinate difference (Cj).

2. A method of decoding, from a bitstream, point cloud geometry data represented by ordered coarse points occupying some discrete positions of a set of discrete positions of a two-dimensional space, wherein the method comprises obtaining an order index difference representative of a difference between order indices of two consecutive occupied coarse points from at least one decoded first binary data ($f_j$), wherein each of said at least one first binary data ($f_j$) is decoded by:

   - obtaining (205) coordinates of a current coarse point ($P_j$) within the two-dimensional space;
   - obtaining (210) a series of at least one second binary data ($f_{j,n}$) based on occupancy data of precedingly decoded coarse points belonging to a causal neighborhood of the current coarse point ($P_j$);
   - obtaining (125) a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
   - entropy decoding (220), from the bitstream, the first binary data (fj) based on the series of at least one second binary data ($f_{j,n}$) and the coordinate difference (Cj).

3. The method of claim 1 or 2, wherein a neighborhood coordinate difference ($C_{j,w}$) is obtained based on a comparison of the coordinate difference (Cj) with a neighborhood width (W) of the causal neighborhood, and the first binary data ($f_j$) is entropy encoded (150) based on the series of at least one second binary data ($f_{j,n}$) and the neighborhood coordinate difference ($C_{j,w}$).

4. The method of claim 3, wherein the neighborhood coordinate difference ($C_{j,w}$) equal to a particular value if and only if the preceding occupied coarse point belongs to the causal neighborhood.

5. The method of one of claims 1 to 4, wherein entropy encoding (150) or decoding (220) the first binary data (fj) comprises:

   - obtaining (130) a first index (11) from the series of at least one second binary data ($f_{j,n}$) and either the coordinate difference (Cj) or the neighborhood coordinate difference ($C_{j,w}$), the first index (11) being representative of a neighborhood occupancy configuration among a first set of neighborhood occupancy configuration indices representative of potential neighborhood occupancy configurations;
   - obtaining (140) a second index (12) by applying an index range reduction function (F) to the first index (11);
   - the second index (12) is representative of the neighborhood occupancy configuration among a second set of neighborhood occupancy configuration indices representative of the potential neighborhood occupancy configurations;

- the index range reduction function is adapted to map each index of the first set of neighborhood occupancy configuration indices to an index of the second set of neighborhood occupancy configuration indices; and
- the range of the second set of neighborhood occupancy configuration indices being lower than the range of the first set of neighborhood occupancy configuration indices; and
- entropy encoding or decoding the first binary data (fj) based on the second index (12).

6. The method of claim 5, wherein the index range reduction function (F) is a hashing function.

7. The method of one of claims 4 to 6, wherein the coordinate difference (Cj) or the neighborhood coordinate difference ($C_{j,w}$) is combined with a neighborhood occupancy configuration associated with the first index (11) or the second index (12).

8. The method of one of claims 1 to 7, wherein the preceding occupied coarse point ($P_{prec}$) is the penultimate occupied coarse point ($P_{penult}$).

9. The method of one of claims 1 or 8, wherein entropy encoding or decoding the first binary data ($f_j$) comprises selecting a context among a set of contexts based on at least the series of at least one second binary data ($f_{j,n}$) or the second index (12).

10. An apparatus of encoding, into a bitstream, point cloud geometry data represented by ordered coarse points occupying some discrete positions of a set of discrete positions of a two-dimensional space, wherein the apparatus comprises at least one processor configured to obtaining at least one first binary data ($f_j$) representative of an order index difference representative of a difference between order indices of two consecutive occupied coarse points and encoding each of said at least one first binary data (fj) by:

- obtaining coordinates of a current coarse point ($P_j$) within the two-dimensional space;
- obtaining a series of at least one second binary data ($f_{j,n}$) based on occupancy data of precedingly encoded coarse points belonging to a causal neighborhood of the current coarse point ($P_j$);
- obtaining a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
- entropy encoding, into the bitstream, the first binary data (fj) based on the series of at least one second binary data ($f_{j,n}$) and the coordinate difference (Cj).

11. An apparatus of decoding, from a bitstream, point cloud geometry data represented by ordered coarse points occupying some discrete positions of a set of discrete positions of a two-dimensional space, wherein the apparatus comprises at least one processor configured to obtaining an order index difference representative of a difference between order indices of two consecutive occupied coarse points from at least one decoded first binary data (fj), wherein each of said at least one first binary data (fj) is decoded by:

- obtaining coordinates of a current coarse point ($P_j$) within the two-dimensional space;
- obtaining a series of at least one second binary data ($f_{j,n}$) based on occupancy data of precedingly decoded coarse points belonging to a causal neighborhood of the current coarse point ($P_j$);
- obtaining a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
- entropy decoding, from the bitstream, the first binary data (fj) based on the series of at least one second binary data ($f_{j,n}$) and the coordinate difference (Cj).

12. A computer program product including instructions which, when the program is executed by one or more processors, causes the one or more processors to carry out a method of encoding, into a bitstream, point cloud geometry data represented by ordered coarse points occupying some discrete positions of a set of discrete positions of a two-dimensional space, wherein the method comprises obtaining at least one first binary data (fj) representative of an order index difference representative of a difference between order indices of two consecutive occupied coarse points and encoding each of said at least one first binary data (fj) by:

- obtaining coordinates of a current coarse point ($P_j$) within the two-dimensional space;
- obtaining a series of at least one second binary data ($f_{j,n}$) based on occupancy data of precedingly encoded coarse points belonging to a causal neighborhood of the current coarse point ($P_j$);
- obtaining a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
- entropy encoding, into the bitstream, the first binary data (fj) based on the series of at least one second binary data ($f_{j,n}$) and the coordinate difference (Cj).

13. A non-transitory storage medium carrying instructions of program code for executing a method of encoding, into a bitstream, point cloud geometry data represented by ordered coarse points occupying some discrete positions of a set of discrete positions of a two-dimensional space, wherein the method comprises obtaining at least one first binary data (fj) representative of an order index difference representative of a difference between order indices of two consecutive occupied coarse points and encoding each of said at least one first binary data (fj) by:

- obtaining coordinates of a current coarse point ($P_j$) within the two-dimensional space;
- obtaining a series of at least one second binary data ($f_{j,n}$) based on occupancy data of precedingly encoded coarse points belonging to a causal neighborhood of the current coarse point ($P_j$);
- obtaining a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
- entropy encoding, into the bitstream, the first binary data (fj) based on the series of at least one second binary data ($f_{j,n}$) and the coordinate difference (Cj).

14. A computer program product including instructions which, when the program is executed by one or more processors, causes the one or more processors to carry out a method of decoding, from a bitstream, point cloud geometry data represented by ordered coarse points occupying some discrete positions of a set of discrete positions of a two-dimensional space, wherein the method comprises obtaining an order index difference representative of a difference between order indices of two consecutive occupied coarse points from at least one decoded first binary data (fj), wherein each of said at least one first binary data (fj) is decoded by:

- obtaining coordinates of a current coarse point ($P_j$) within the two-dimensional space;
- obtaining a series of at least one second binary data ($f_{j,n}$) based on occupancy data of precedingly decoded coarse points belonging to a causal neighborhood of the current coarse point ($P_j$);
- obtaining a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
- entropy decoding, from the bitstream, the first binary data (fj) based on the series of at least one second binary data ($f_{j,n}$) and the coordinate difference (Cj).

15. A non-transitory storage medium carrying instructions of program code for executing a method of decoding, from a bitstream, point cloud geometry data represented by ordered coarse points occupying some discrete positions of a set of discrete positions of a two-dimensional space, wherein the method comprises obtaining an order index difference representative of a difference between order indices of two consecutive occupied coarse points from at least one decoded first binary data ($f_j$), wherein each of said at least one first binary data ($f_j$) is decoded by:

- obtaining coordinates of a current coarse point ($P_j$) within the two-dimensional space;
- obtaining a series of at least one second binary data ($f_{j,n}$) based on occupancy data of precedingly decoded coarse points belonging to a causal neighborhood of the current coarse point ($P_j$);
- obtaining a coordinate difference (Cj) between a first coordinate of the current coarse point ($P_j$) and a first coordinate of a preceding occupied coarse point in the two-dimensional space, said current and preceding occupied coarse points having a same second coordinate ($\lambda_j$) in the two-dimensional space; and
- entropy decoding, from the bitstream, the first binary data (fj) based on the series of at least one second binary data ($f_{j,n}$) and the coordinate difference (Cj).

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

Fig. 11

Fig. 12

**Fig. 13**

**Fig. 14**

**Fig. 15**

$P_{+1}$

$P_{penult}$

$W$

$C_j = 5$

$P_j$

$\Delta o=4$

P

**Fig. 16**

$P_{+1}$

$P_{penult}$

$P_j$

$C_j = 4$

$\Delta o=4$

P

**Fig. 17**

**Fig. 18**

**Fig. 19**

$200$

$205$

$P_j$

$210$          $125$

$f_{j,n}$          $C_j$

$130$

$I1$

$140$          INF

$I2$    $220$          $230$

B

$f_j$

## Fig. 20

$150$          $220$

$I2$          $I2$

$151$          $151$

Ctx    $152$          Ctx    $221$

$f_j$          $160$          B          $f_j$    $230$

B

## Fig. 21

150/220

I2

151

ctxIdx

Tctx

| 0 | 1 | | | $N_{ctx}$-1 |

updater

$p_{ctxIdx}$

B

152,221

$f_j$

# Fig. 22

150

220

155

D

153

155

D

153

CtxIdx

154

CtxIdx

154

Ctx

152

Ctx

221

$f_j$

160

B

230

B

$f_j$

B

# Fig. 23

**Fig. 24**

Europäisches
Patentamt

European
Patent Office

Office européen
des brevets

# EUROPEAN SEARCH REPORT

**Application Number**

EP 21 30 6292

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FLYNN (BLACKBERRY) D ET AL: "PCC CE3.4 Report on occupancy coding using neighbours", 122. MPEG MEETING; 20180416 – 20180420; SAN DIEGO; (MOTION PICTURE EXPERT GROUP OR ISO/IEC JTC1/SC29/WG11), , no. m42609 11 April 2018 (2018-04-11), XP030070948, Retrieved from the Internet: URL:http://phenix.int-evry.fr/mpeg/doc_end _user/documents/122_San%20Diego/wg11/m4260 9-v1-m42609_v1.zip m42609.pdf [retrieved on 2018-04-11] | 1-4,7,8, 10-15 | INV. G06T9/00 H04N19/91 |
| Y | * the whole document * | 5,6 | |
| X | WO 2021/164861 A1 (BLACKBERRY LTD [CA]; LASSERRE SEBASTIEN [CA]; TAQUET JONATHAN [CA]) 26 August 2021 (2021-08-26) | 1-4,7-15 | |
| Y | * paragraph [0047] – paragraph [0058] * * paragraph [0057] – paragraph [0058] * * paragraph [0070] – paragraph [0076] * | 5,6 | |
| | | | TECHNICAL FIELDS SEARCHED (IPC) |
| Y | US 2021/218994 A1 (FLYNN DAVID [DE]) 15 July 2021 (2021-07-15) * paragraph [0033] – paragraph [0034] * * paragraph [0044] * | 5 | G06T H04N |

-/--

| | | |
|---|---|---|
| The present search report has been drawn up for all claims | | |
| Place of search | Date of completion of the search | Examiner |
| Munich | 3 March 2022 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LASSERRE (BLACKBERRY) S ET AL: "[PCC] Neighbour-dependent entropy coding of occupancy patterns in TMC3", 121. MPEG MEETING; 20180122 – 20180126; GWANGJU; (MOTION PICTURE EXPERT GROUP OR ISO/IEC JTC1/SC29/WG11), , no. m42238 20 January 2018 (2018-01-20), XP030070580, Retrieved from the Internet: URL:http://phenix.int-evry.fr/mpeg/doc_end _user/documents/121_Gwangju/wg11/m42238-v1 -%5BPCC%5D_Neighbour-dependent_entropy_cod ing_of_occupancy_patterns_in_TMC3.zip [PCC]_Neighbour-dependent_entropy_coding_o f_occupancy_patterns_in_TMC3.docx [retrieved on 2018-01-20] * the whole document * ----- | 5,6 | |
| | | | TECHNICAL FIELDS SEARCHED (IPC) |

The present search report has been drawn up for all claims

| Place of search | Date of completion of the search | Examiner |
|---|---|---|
| Munich | 3 March 2022 | Schoeyer, Marnix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 6292

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2022

| Patent document cited in search report | | Publication date | Patent family member(s) | | Publication date |
|---|---|---|---|---|---|
| WO 2021164861 | A1 | 26-08-2021 | NONE | | |
| US 2021218994 | A1 | 15-07-2021 | US 2021217206 | A1 | 15-07-2021 |
| | | | US 2021218994 | A1 | 15-07-2021 |

EPO FORM P0459

For more details about this annex : see Official Journal of the European Patent Office, No. 12/82